# EUROPÄISCHE PATENTANMELDUNG

(11) **EP 2 288 110 A1**
(43) Veröffentlichungstag der Anmeldung: **23.02.2011**
(21) Anmeldenummer: 10008128.0
(22) Anmeldetag: 04.08.2010
(51) Int. Cl.: H04L 29/06, H04N 7/167, G06F 21/00

(54) **Verteilung von Medieninhalten mit inhärenter nutzerorientierter Berechtigungsprüfung**

(30) Priorität: 14.08.2009 DE 102009037353
(71) Anmelder: Deutsche Telekom AG, 53113 Bonn (DE)
(72) Erfinder: Röbke, Matthias, 50859 Köln (DE); Kramarz-von-Kohout, Gerhard, 53113 Bonn (DE)
(74) Vertreter: COHAUSZ DAWIDOWICZ HANNIG & SOZIEN

(57) **Zusammenfassung**

Die Erfindung betrifft ein Verfahren zur Überprüfung der Nutzungsberechtigung für einen broadcastbasierten Kommunikationsdienst (1) und zur Darstellung von Medieninhalten, die über den Kommunikationsdienst (1) an eine Vielzahl von Empfängern verschlüsselt ausgestrahlt werden. Der Kommunikationsdienst (1) ist mittels eines Endgerätes (2) nutzbar, und die Medieninhalte sind mittels des Endgerätes (2) darstellbar. Das Endgerät (2) löst einen Verifikationsprozess (12, 22, 32) aus, bei dem die Nutzungsberechtigung mittels einer Überprüfungsinstanz (3) überprüft wird. Die Überprüfungsinstanz (3) erzeugt nach der Prüfung der Nutzungsberechtigung eine Meldung (53) mit einer Information, die angibt, ob der Nutzer berechtigt oder nicht berechtigt ist, sich einen Medieninhalt darstellen zu lassen, wobei diese Meldung (53) an das Endgerät (2) übermittelt wird und erst bei Vorliegen der die Nutzungsberechtigung bestätigenden Meldung (53) die Darstellung (15, 25, 35) der Inhalte mittels des Endgerätes (2) erfolgt.

## Beschreibung

Die Erfindung betrifft ein Verfahren und ein System zur Überprüfung der Nutzungsberechtigung beim Empfang von Medieninhalten eines broadcastbasierten Kommunikationsdienstes, insbesondere bei verschlüsselter Übermittlung, wobei die Verteilung der Medieninhalte in einem gewissen Verteilungsgebiet an eine Vielzahl von Empfängern erfolgt, und der Empfang im Verteilungsgebiet mit einem entsprechenden mobilen und / oder stationären Endgerät erfolgt.

Bei einem broadcastbasierten Dienst beginnt ein Absender die Verteilung eines Medieninhaltes im Verteilungsgebiet, ohne die einzelnen Empfänger kennen zu müssen. Insbesondere werden die Empfänger nicht explizit vom Absender der Kommunikation adressiert. Auf unteren Ebenen einer mehrstufigen Verteilung kann allerdings eine Einschränkung auf diejenigen Empfänger erfolgen, die den Medieninhalt vorab angefordert haben.

Diese Form der Kommunikation, also die gleichzeitige Ausstrahlung eines Inhaltes an eine beliebige Anzahl von Empfängern in einem Verteilungsgebiet wird üblicherweise mit "Broadcast" bezeichnet, abgeleitet vom englischen Begriff für Rundfunk.

Der Begriff des Medieninhaltes bezeichnet hier jedwede Art von Inhalt bzw. Daten in beliebigem Format. Medieninhalte umfassen somit Bilder, Videos, Programme, aber auch jedwede Form von Daten.

Zwei verschiedenen Arten von Medieninhalten können unterschieden werden: Diskrete Medien-Typen (gekennzeichnet durch abgeschlossene Objekte, also Dateien, die durch eine feste Dateigröße charakterisiert sind), wie sie z.B. in Nachrichten-Diensten wie E-Mail, SMS, MMS etc. oder Diensten, die auf dem Download solcher Dateien mit fester Dateigröße basieren, zu finden sind, und kontinuierliche Medien, welche bei Streaming-Diensten wie z.B. bei webbasiertem Radio, webbasiertem Fernsehen oder auch bei einzelverbindungsbasiertem mobilen Fernsehen vorzufinden sind.

Nach dem Stand der Technik ist es heute möglich, über das Internet Medieninhalte sowohl über Festnetze als auch über Mobilfunknetze zu verbreiten. Diskrete und kontinuierliche Medien können hierbei auch per Broadcast verteilt werden, so dass sie von jedermann im Verteilungsgebiet mit geeigneter technischer Ausstattung, wobei das Endgerät stationär und / oder mobil sein kann, empfangen werden können. Diese Art der Verteilung wird zum Beispiel bei Fernsehen auf DVB-T-Basis genutzt. Darüber hinaus sind broadcastbasierte Verteilverfahren bekannt, welche den IP-Datenstrom, welcher vom Dienstanbieter zur Verfügung gestellt wird, an Nutzer, die den Inhalt (Content) anfordern, anfragegesteuert verteilen. So wird bei IPTV ein einzelnes Fernsehprogramm genau an diejenigen Benutzer übertragen, die dieses sehen wollen. Hierbei handelt es sich aber in der Regel nicht um dedizierte Einzelverbindungen. Vielmehr werden die Nutzdaten erst lokal vervielfältigt und dann an die jeweiligen Nutzer verteilt.

Die broadcastbasierte Verteilung erfolgt in der Regel verschlüsselt, so dass nur derjenige, der den Content entschlüsseln kann, die empfangenen Medien auch tatsächlich nutzen kann.

Broadcastbasierte Kommunikationsdienste sind in der Regel dadurch charakterisiert, dass die Verteilung der Nutzdaten ohne Anforderung durch den Nutzer erfolgt. Für einen Kommunikationsdienst, der nicht broadcastbasiert ist, gelten die Verfahren für eine automatische Nutzerverifikation, wie sie aus der DE 10 2007 048 044 A1 bekannt sind. Bei einem solchen nicht-broadcastbasierten Kommunikationsdienst kann es sich um einen beliebigen Informations- und / oder Mediendienst handeln, der an einen oder mehrere individuelle Nutzer gerichtet ist und für den Zugriff über ein Computernetzwerk wie das Internet oder ein Intranet geeignet ist. Der Zugriff bei einem nicht-broadcastbasierten Kommunikationsdienst erfolgt dagegen in der Regel auf Anforderung durch den Nutzer.

Es ist nach heutigem Stand der Technik hingegen für broadcastbasierte Kommunikationsdienste nicht möglich, eine automatische Nutzerverifikation durchzuführen. Mittels einer Altersverifikation wird überprüft, ob der Empfänger alt genug ist, den Content (Inhalt) nutzen zu dürfen, um so beispielsweise einen jugendlichen Empfänger vor jugendgefährdenden Inhalten zu schützen. Mittels einer Berechtigungsverifikation wird überprüft, ob es dem Empfänger erlaubt ist, den Content zu nutzen, weil er beispielsweise den entsprechenden Dienst subskribiert hat bzw. er seinen Zahlungsverpflichtungen nachgekommen ist. Ein weiteres Beispiel für eine Nutzerverifikation ist die Überprüfung der Kreditwürdigkeit.

Die Aufgabe der vorliegenden Erfindung ist es, ein System und Verfahren zur Verfügung zu stellen, welche es erlauben, in broadcastbasierten Kommunikationsdiensten, also beispielsweise in TV-Angeboten für mobile und / oder stationäre Endgeräte, eine inhärente Nutzerverifikation, insbesondere Altersverifikation und Berechtigungsverifikation, bei der Nutzung von Medieninhalten zur Verfügung zu stellen.

Diese Aufgabe wird erfindungsgemäß durch ein Verfahren gemäß Anspruch 1 gelöst.

Es wird ein System und ein Verfahren zur Überprüfung der Nutzungsberechtigung für einen broadcastbasierten Kommunikationsdienst und zur Darstellung von Medieninhalten, die über den broadcastbasierten Kommunikationsdienst an eine Vielzahl von Empfängern verschlüsselt ausgestrahlt werden, wobei der Kommunikationsdienst mittels eines mobilen oder stationären Endgerätes nutzbar ist und die Medieninhalte mittels des Endgerätes darstellbar sind, vorgeschlagen, bei dem das Endgerät einen Verifikationsprozess auslöst, bei dem die Nutzungsberechtigung mittels einer Überprüfungsinstanz überprüft wird, wobei die Überprüfungsinstanz nach der Prüfung der Nutzungsberechtigung eine Meldung mit einer Information erzeugt, die angibt, ob der Nutzer berechtigt oder nicht berechtigt ist, sich einen Medieneinhalt darstellen zu lassen, und wobei diese Meldung direkt oder indirekt an das Endgerät übermittelt wird und erst bei Vorliegen der die Nutzungsberechtigung bestätigenden Meldung die Darstellung der Inhalte mittels des Endgerätes erfolgt.

Mit einem broadcastbasierten Kommunikationsdienst, abgeleitet von dem englischen Begriff für Rundfunk (englisch: Broadcast), ist dabei jegliche Form der Kommunikation respektive von Medien- und Kommunikationsdiensten umfasst, insbesondere die gleichzeitige Ausstrahlung eines Inhaltes an eine beliebige, d.h. unbegrenzte Anzahl von Empfängern in einem Verteilungsgebiet, wie beispielsweise Radiosender und Fernsehsender.

Mit Darstellung der Medieninhalte ist dabei jede Form der Wiedergabe mittels eines Endgerätes umfasst, insbesondere das Abspielen von Filmen, Filmsequenzen, Ton- oder Musikstücken sowie das Anzeigen von Bildern, Texten und dergleichen mittels des Endgerätes, welches hierzu über entsprechende Mittel wie Bildschirm, Lautsprecher, etc. verfügt.

Bevor der Nutzer einen broadcastbasierten Kommunikationsdienst bzw. den zur Verfügung gestellten Content (Inhalt) tatsächlich nutzen kann, wird somit automatisch eine Überprüfung der Nutzungsberechtigung durch das Endgerät ausgelöst. Die Überprüfung erfolgt in der Überprüfungsinstanz, die anschließend eine Meldung mit dem Inhalt ausgibt, ob der den Medieninhalt anfordernde Nutzer berechtigt ist, sich diesen darstellen zu lassen, oder ob er hierzu nicht berechtigt ist. Die Meldung enthält folglich ausschließlich eine logische "ja/ nein Information". Weitere Informationen, wie z.B. ein Schlüssel zur Entschlüsselung des Medieninhalts brauchen von der Überprüfungsinstanz nicht übermittelt zu werden. Ein solcher Schlüssel ist vielmehr bereits in dem Endgerät vorhanden oder wird von einer anderen Instanz zur Verfügung gestellt.

Bei dem Broadcastdienst kann es sich um einen beliebigen Informations- und / oder Mediendienst handeln, dessen Inhalte analog oder digital über ein beliebiges Übertragungsmedium (z.B. Funk, Glasfaser) oder über ein Computernetzwerk oder andere geeignete Systeme verbreitet werden, wobei die Inhalte grundsätzlich an jedermann in einem gewissen Gebiet übermittelt werden, der den Dienst mit geeigneter technischer Ausstattung, wobei das Endgerät stationär und / oder mobil sein kann, empfangen kann. Die Verteilung erfolgt in der Regel ohne Anforderung durch den Nutzer. Unter Broadcastdienst werden auch diejenigen Dienste wie z.B. IPTV verstanden, bei denen die Verteilung in der Regel mehrstufig erfolgt und nur auf der unteren Ebene eine Vervielfältigung der Nutzdaten gezielt für diejenigen Nutzer, die die Nutzdaten empfangen wollen, erfolgt.

Unter die hier beschriebenen Broadcastdienste fallen insbesondere TV-Dienste, wobei die Übertragung der Bild- und Toninformationen zum einen analog oder digital und zum anderen terrestrisch (z.B. das antennengestützte DVB-T), extraterrestrisch (z.B. das satellitengestützte DVB-S) oder leitungsgebunden (z.B. Kabel-TV) erfolgen kann. Die Verteilung kann auch IP-basiert (z.B. IPTV) über ein geeignetes Übertragungsmedium erfolgen. Hiervon zu unterscheiden ist das bereits genannte webbasierte TV, da hier die Übermittlung regelmäßig auf Anforderung des Nutzers erfolgt.

Durch den Rückgriff auf eine Überprüfungsinstanz, mittels derer die Prüfung der Nutzungsberechtigung erfolgt, wobei der Nutzer jedoch nicht oder nur mit einem unverhältnismäßig hohen technischen Aufwand diese Überprüfungsinstanz oder den zugehörigen Kommunikationsvorgang manipulieren kann, ist eine Überprüfung der Nutzungsberechtigung mit einer sehr hohen Zuverlässigkeit möglich. Das Generieren der Verifikationsanfrage erfolgt dabei automatisch bei jedem Versuch, geschützte Daten und / oder geschützte Dienste zu nutzen.

Weitere vorteilhafte Ausgestaltungen der Erfindung sind in den Unteransprüchen angegeben.

In einer bevorzugten Ausführungsform wird eine Entschlüsselung der verschlüsselt ausgestrahlten Medieninhalte mittels des Endgerätes nach Erhalt der die Nutzungsberechtigung bestätigenden Meldung, die von der Überprüfungsinstanz ausgegeben wird, durchgeführt. Danach erfolgt die Darstellung der Inhalte mittels des Endgerätes.

Bei einer anderen bevorzugten Ausführungsform wird eine Entschlüsselung der verschlüsselt ausgestrahlten Medieninhalte mittels des Endgerätes unmittelbar nach dem Empfang der Medieninhalte durchgeführt, wobei die Darstellung der Inhalte mittels des Endgerätes bis zum Erhalt der die Nutzungsberechtigung bestätigenden Meldung von der Überprüfungsinstanz gesperrt ist und erst nach dem Erhalt dieser Meldung die Darstellung der Inhalte mittels des Endgerätes erfolgt.

Die Entschlüsselung der verschlüsselt ausgestrahlten Medieninhalte erfolgt dabei mittels eines Decoders, der Bestandteil des Endgerätes oder dem Endgerät zugeordnet sein kann. Mit der Formulierung, dass die Entschlüsselung der verschlüsselt ausgestrahlten Medieninhalte mittels des Endgerätes erfolgt, ist somit insbesondere mit umfasst, dass dem Endgerät ein Decoder zugeordnet ist, der einen Schlüssel zur Entschlüsselung des Medieninhalts enthält.

In einer besonders bevorzugten Ausführungsform wird den verschlüsselt ausgestrahlten Medieninhalten ein Protokollelement zugefügt, insbesondere ein standardisiertes Protokollelement, wobei dieses Protokollelement vom Endgerät dahingehend ausgewertet wird, dass der Verifikationsprozess von dem Endgerät auszulösen ist.

Eine wesentliche Grundidee der Erfindung beruht somit darauf, beim Empfang von Daten broadcastbasierter Kommunikationsdienste ein Protokollelement mit entsprechenden Parametern zu etablieren, welches im Endgerät des Nutzers den Verifikationsprozess auslöst.

In einer bevorzugten Ausführungsform überprüft die Überprüfungsinstanz die Nutzungsberechtigung durch Abfrage eines Teilnehmeridentifikationsmoduls, insbesondere der SIM oder der USIM des Endgerätes. Hierdurch werden eine sehr hohe Zuverlässigkeit und Sicherheit des Systems geschaffen, da es eines unverhältnismäßig hohen Aufwandes bedürfte, die SIM oder USIM des Endgerätes zu manipulieren. Die zur Überprüfung benötigten Daten, wie beispielsweise das Geburtsdatum des Nutzers, sind hierzu auf der SIM/USIM gespeichert und werden ausgelesen und der Überprüfungsinstanz übermittelt.

Dabei handelt es sich um das Teilnehmeridentifizierungsmodul (engl. Subscriber Identity Module, abgekürzt SIM) eines Mobilfunkendgerätes, welches einerseits eine zuverlässige und eindeutige Identifizierung gestattet und ferner nur mit unverhältnismäßig hohem Aufwand manipulierbar ist und daher eine hohe Zuverlässigkeit bietet.

Vorzugsweise ist die Überprüfungsinstanz ganz oder teilweise außerhalb des Endgerätes angesiedelt, insbesondere auf einer externen Datenverarbeitungsanlage. Die Überprüfungsinstanz kann somit beispielsweise auf einem externen Webserver angesiedelt sein.

Alternativ oder kumulativ kann die Überprüfungsinstanz ganz oder teilweise in einem geschützten Bereich des Endgerätes angesiedelt sein, auf den der Nutzer keinen Zugriff hat.

Hierdurch kann eine Manipulation der Überprüfungsinstanz durch einen Nutzer des broadcastbasierten Kommunikationsdienstes ausgeschlossen werden.

Insbesondere kann die Überprüfungsinstanz verteilt angeordnet sein in Form mehrerer, sich ergänzende Module oder Instanzen, wodurch die Sicherheit weiter erhöht wird.

Bevorzugt erfolgt vor oder nach der Überprüfung der Nutzungsberechtigung eine Nutzerauthentisierung, insbesondere durch Abfrage einer Persönlichen Identifikationsnummer (PIN) und/oder Erfassung und Auswertung biometrischer Daten.

Durch eine zusätzliche Nutzerauthentisierung kann die Sicherheit des Systems bzw. Verfahrens weiter gesteigert werden, da z.B. bei einem Verlust oder Diebstahl des Endgerätes eine Nutzung der broadcastbasierten Kommunikationsdienste wegen dieser zusätzlichen Nutzerauthentisierung, vorausgesetzt, ein Dritter kann sie nicht erfüllen, unterbunden bleibt. Ebenso bleibt bei einer zusätzlichen Nutzerauthentisierung die Nutzung eines Contents, der nur für Erwachsene geeignet ist, unterbunden, wenn ein Kind das Endgerät seiner Eltern nutzt.

Die Sicherheit kann weiter durch den Einsatz kryptographischer Mechanismen gesteigert werden, indem die Meldung der Überprüfungsinstanz beispielsweise mit einer digitalen Signatur versehen wird, um sicherzustellen, dass die Meldung nicht manipuliert und tatsächlich von der Überprüfungsinstanz generiert wurde. Es kann auch die gesamte Kommunikation kryptographisch gesichert werden.

Mehrere Ausführungsbeispiele des erfindungsgemäßen Verfahrens oder Systems sind in den Figuren dargestellt und werden nachfolgend erläutert. Es zeigen:
- Fig. 1: Eine schematische Darstellung von broadcastbasierten Kommunikationsdiensten, die mittels Mobilfunkendgerät und / oder PC und / oder TV-Empfangsgerät genutzt werden können, mit inhärenter Verifikationsprozedur;
- Fig. 2: ein Ablaufschema eines ersten Ausführungsbeispieles des erfindungsgemäßen Verfahrens;
- Fig. 3: ein Ablaufschema eines zweiten Ausführungsbeispieles des erfindungsgemäßen Verfahrens;
- Fig. 4: ein Ablaufschema eines dritten Ausführungsbeispieles des erfindungsgemäßen Verfahrens;
- Fig. 5: ein Ablaufschema der Verifikations- und Authentisierungsprozedur des erfindungsgemäßen Verfahrens.

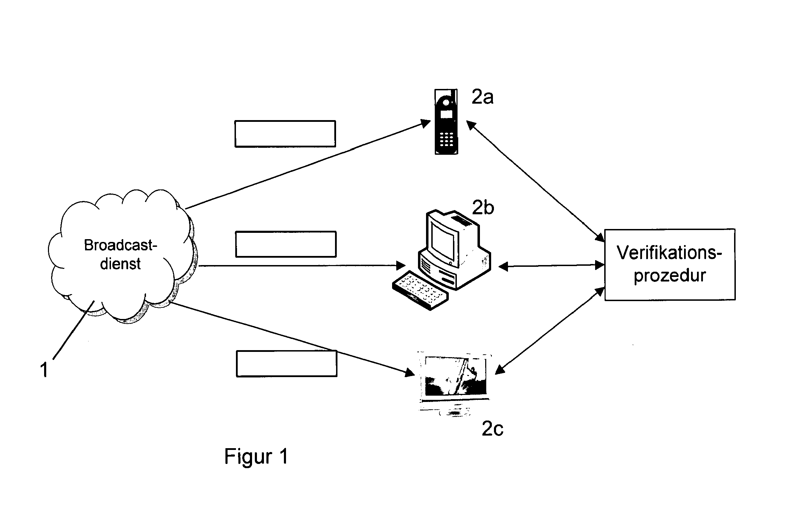

Die Grundidee der Erfindung beruht darauf, beim Empfang von Daten broadcastbasierter Kommunikationsdienste 1 ein Protokollelement (mit entsprechenden Parametern) zu etablieren, welches im Endgerät 2 des Nutzers einen Verifikationsprozess 3 auslöst, wie dies in Figur 1 dargestellt ist. Bei dem Endgerät 2 kann es sich, wie in Figur 1 dargestellt, beispielsweise um ein Mobilfunkendgerät 2a, um einen PC 2b oder um ein TV-Gerät 2c handeln. Grundsätzlich ist die vorliegende Erfindung geeignet für broadcastbasierte Kommunikationsdienste in beliebigen Kommunikationsnetzen mit stationären oder mobilen Endgeräten.

Die Medieninhalte werden vom broadcastbasierten Dienst 1 verschlüsselt ausgestrahlt. Zur Darstellung der Medieninhalte mittels eines Endgerätes 2 ist es erforderlich, die über Broadcast ausgestrahlten Inhalte zu entschlüsseln.

Im Endgerät 2 des Nutzers wird eine Verifikationsprozedur 3 gestartet, welche eine Anfrage an eine "Vertrauenswürdige Instanz" auslöst. Diese "Vertrauenswürdige Instanz" kann die SIM/USIM des Endgerätes 2 des Nutzers oder eine externe Applikation außerhalb des Endgerätes 2 (z.B. eine Applikation auf einem "Berechtigungs-Server") oder eine Applikation, welche sich in einem geschützten Bereich des Endgerätes 2 befindet, sein.

Das Protokollelement ist erfindungsgemäß so parametrisiert, dass die Antwort, welche an den Kommunikationsdienst 1 zurückgeliefert wird, nur zwei Werte annehmen kann - erlaubt / nicht erlaubt.

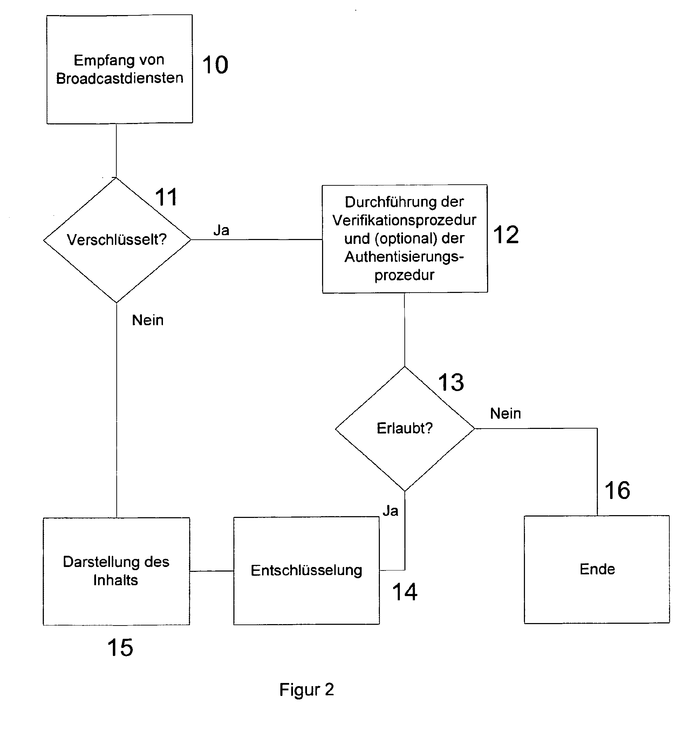

Die Figuren 2 - 4 illustrieren diesen Prozess in unterschiedlichen Ausführungsbeispielen.

In Figur 2 werden diejenigen Nutzdaten verschlüsselt übertragen, die eine Nutzerverifikation 12 erfordern. Die Verifikationsprozedur 12 wird dadurch ausgelöst, dass das Endgerät beim Empfang 10 der Nutzdaten im Schritt 11 erkennt, dass diese verschlüsselt sind.

In Figur 2 dargestellt ist ein erstes Ausführungsbeispiel des erfindungsgemäßen Verfahrens. In einem ersten Schritt 10 werden die von dem broadcastbasierten Dienst ausgestrahlten Daten empfangen. Im nächsten Schritt 11 erfolgt eine Überprüfung, ob die Daten verschlüsselt sind. Ist dies nicht der Fall, erfolgt unmittelbar die Darstellung 15 des Inhalts.

Sind die Daten jedoch verschlüsselt übermittelt worden und wird dies im Schritt 11 festgestellt, so erfolgt im Schritt 12 die Durchführung der Verifikationsprozedur und optional der Authentisierungsprozedur. Im folgenden Schritt 13 wird festgestellt, ob die Darstellung der Medieninhalte erlaubt ist oder nicht. Ist dies nicht der Fall, bricht das Verfahren am Schritt 16 ab. Ist die Darstellung der Medieninhalte nach der Überprüfung im Schritt 13 jedoch erlaubt, so erfolgt im nächsten Schritt 14 die Entschlüsselung der im ersten Schritt 10 verschlüsselt enthaltenen Medieninhalte und sodann im nächsten Schritt 15 die Darstellung der Inhalte.

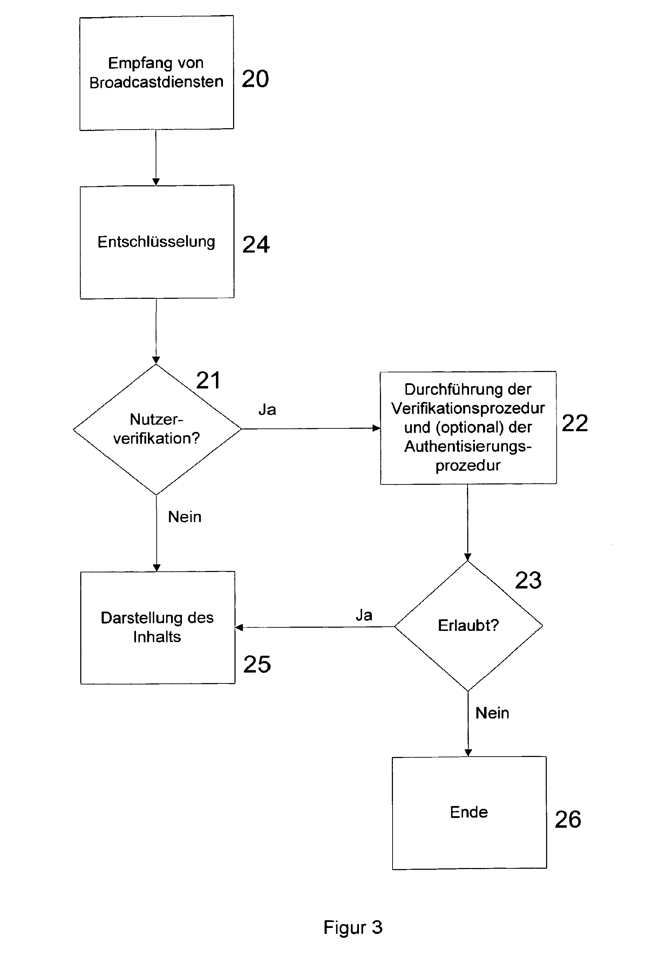

In Figur 3 werden die Nutzdaten verschlüsselt übertragen. Nach der Entschlüsselung 24 löst das Endgerät bei Bedarf eine Verifikationsprozedur 22 aus. Hierzu wertet das Endgerät beispielsweise eine Kennung aus, die die jeweiligen unverschlüsselten Nutzdaten kennzeichnen.

Bei dem Verfahren gemäß Figur 3 erfolgt nach dem Empfang der verschlüsselt übertragenen Medieninhalte 20 unmittelbar die Entschlüsselung 24, woraufhin nach der Entschlüsselung 24 im Schritt 21 überprüft wird, ob eine Nutzerverifikation erforderlich ist und durchgeführt werden muss. Ist dies der Fall, so wird bei Bedarf die Verifikationsprozedur 22 ausgeführt. D.h. es erfolgt im Schritt 22 die Durchführung der Verifikationsprozedur und optional der Authentisierungsprozedur, sofern erforderlich.

Im Anschluss an die Verifikationsprozedur 22 wird im folgenden Schritt 23 festgestellt, ob die Darstellung der Medieninhalte erlaubt ist oder nicht erlaubt ist. Ist dies nicht der Fall, so führt dies zum Abbruch 26, d.h. dass die Inhalte (Content) nicht dargestellt wird. Alternativ, wenn im Schritt 23 festgestellt wird, dass die Darstellung erlaubt ist, so erfolgt die Darstellung 25 des Inhalts.

Wird im Rahmen der Überprüfung 21, ob eine Nutzerverifikation erforderlich ist, bereits festgestellt, dass die Medieninhalte frei dargestellt werden können und es keiner Verifikationsprozedur bedarf, so erfolgt unmittelbar die Darstellung der Inhalte im Schritt 25.

Die Besonderheit bei dem in Figur 3 dargestellten zweiten Ausführungsbeispiel liegt somit darin, dass die verschlüsselt empfangenen Mediendaten des Mediendienstes, d.h. des Broadcast-Dienstes, unmittelbar entschlüsselt werden, jedoch nicht direkt zur Darstellung auf dem benutzten Endgerät gelangen. Vielmehr bedarf es zur Wiedergabe der Medieninhalte nach der Entschlüsselung der Medieninhalte der Durchführung einer Verifikationsprozedur. Erst wenn diese positiv durchlaufen wurde, erfolgt die Darstellung des Inhalts im Schritt 25.

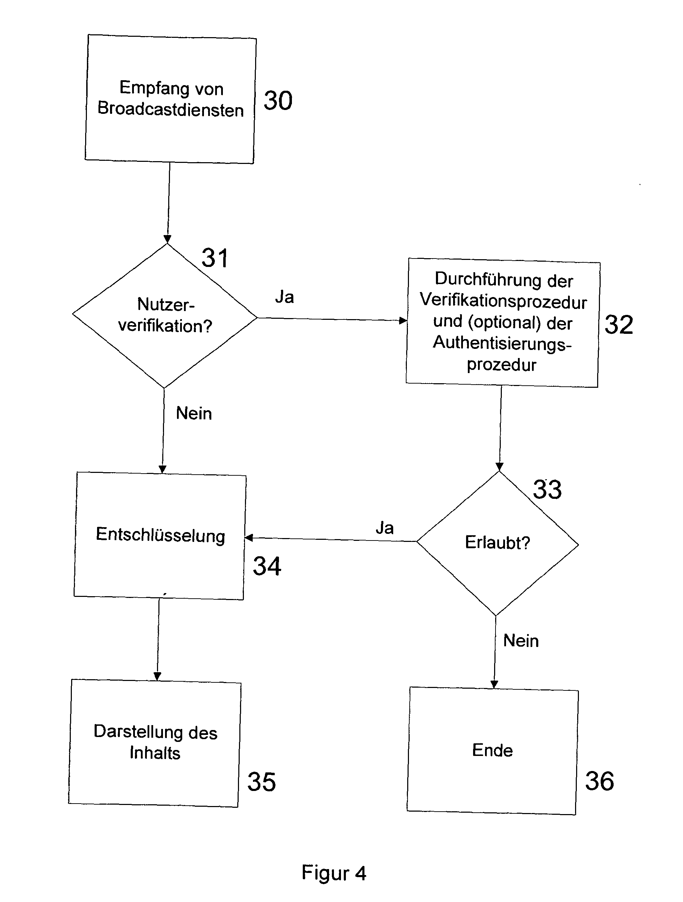

In Figur 4 werden die Nutzdaten verschlüsselt übertragen. Die verschlüsselten Nutzdaten sind durch eine unverschlüsselte Kennung gekennzeichnet. Das Endgerät wertet diese Kennung aus und löst bei Bedarf eine Verifikationsprozedur 32 aus. In diesem Fall erfolgt die Entschlüsselung 34 nur bei positiv bestandener Verifikationsprozedur 32.

Dabei erfolgt bei diesem Ausführungsbeispiel der Empfang von Broadcastdiensten 30 enthaltend neben dem verschlüsselten Content ferner unverschlüsselte Zusatzinformationen. Zunächst werden bei Empfang von Broadcastdiensten 30 die unverschlüsselten Zusatzinformationen ausgewertet.

Nach dem Empfang 30 der Broadcast-Dienste, d.h. der verschlüsselte übertragenen Medieninhalte, erfolgt im Schritt 31 eine dahingehende Überprüfung, ob eine Nutzerverifikation durchgeführt werden muss. Ist dies nicht der Fall, so wird im Schritt 34 die Entschlüsselung der verschlüsselt empfangenen Medieninhalte durchgeführt und im nächsten Schritt 35 erfolgt die Darstellung des Inhalts.

Wird bei der Überprüfung 31, ob eine Nutzerverifikation durchgeführt werden muss, festgestellt, dass eine solche Verifikation erforderlich ist, so erfolgt im Schritt 32 die Durchführung der Verifikationsprozedur und optional der Authentisierungsprozedur.

Im nächsten Schritt 33 wird sodann festgestellt, ob die Verifikationsprozedur es bestätigt hat, dass die Darstellung der Medieninhalte erlaubt ist, so erfolgt im nächsten Schritt 34 die Entschlüsselung der Medieninhalte und im nächsten Schritt 35 die Darstellung der Medieninhalte.

Wird jedoch im Anschluss an die Verifikationsprozedur 32 im Schritt 33 festgestellt, dass die Darstellung der Medieninhalte nicht erlaubt ist, so führt dies zum Abbruch 36.

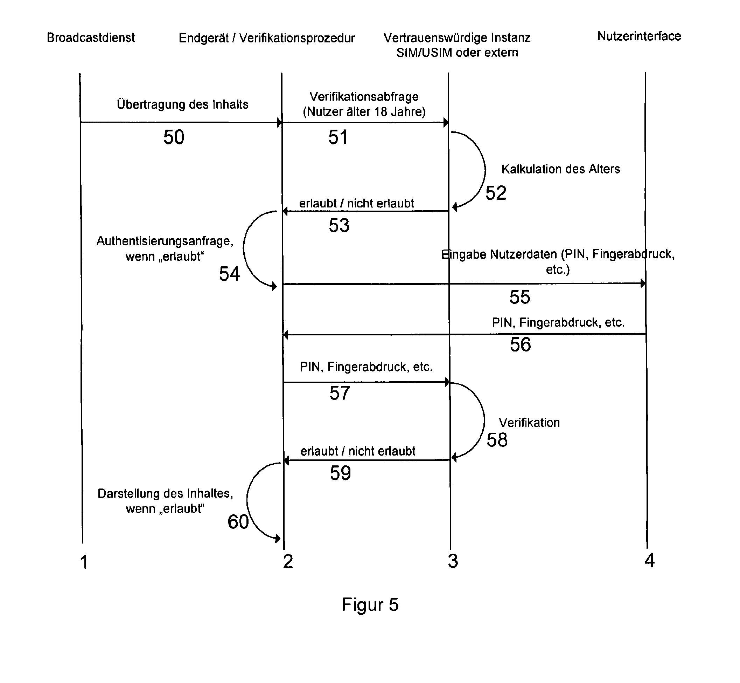

Die Verifikationsprozedur ist beispielhaft in Figur 5 dargestellt und umfasst eine Verifikationsabfrage 51 (z.B. Nutzer älter als 18 Jahre) vom Empfangsgerät 2 zu einer Vertrauenswürdigen Instanz 3 (z.B. SIM/USIM). Die Antwort der Vertrauenswürdigen Instanz 3 an das Empfangsgerät 2 lautet "erlaubt/unerlaubt". Das Empfangsgerät 2 entschlüsselt, falls notwendig, im Falle "erlaubt" den Content (Inhalt) und stellt den Content dar.

Die zur Entschlüsselung notwendigen kryptographischen Schlüssel werden je nach Ausprägung im Endgerät 2 vorgehalten oder durch die Vertrauenswürdige Instanz 3 nach erfolgreich durchlaufener Verifikationsprozedur dem Endgerät 2 bereitgestellt.

Alternativ erfolgt die Entschlüsselung in der Vertrauenswürdigen Instanz 3. Auf diese Weise ist sichergestellt, dass die kryptographischen Schlüssel nur innerhalb der geschützten Umgebung der Vertrauenswürdigen Instanz 3 eingesetzt werden.

Im Einzelnen wird die Verifikationsprozedur inklusive der optionalen Authentisierungsprozedur in Figur 5 dargestellt:
Beim Empfang 50 des per Broadcast vom Broadcastdienst 1 übertragenen Contents (Inhalte) mittels eines Endgerätes 2 wird bedarfsweise, wenn also der auf dem Endgerät 2 darzustellende Content nicht für jedermann geeignet ist, automatisch seitens des Endgerätes 2 eine Verifikationsprozedur eingeleitet. Hierzu wird eine Verifikationsanfrage 51 generiert und an eine Überprüfungsinstanz 3, nämlich eine intern oder extern des Endgerätes 2 angesiedelte Vertrauenswürdige Instanz 3 weiterleitet. Diese nimmt eine Überprüfung 52 der Nutzungsberechtigung vor, in dem in Figur 5 dargestellten Beispiel durch eine Kalkulation des Alters des Nutzers des broadcastbasierten Kommunikationsdienstes 1.

Die Überprüfungsinstanz 3 erzeugt nach Kalkulation 52 des Alters des Nutzers anhand der der vertrauenswürdigen Instanz 3 vorliegenden Daten eine entsprechende Meldung 53 bezüglich der Nutzungsberechtigung (erlaubt/nicht erlaubt) und übergibt diese Meldung an das Endgerät 2 zurück. Sofern der Meldung 53 (erlaubt / nicht erlaubt) zufolge der Zugriff auf den Content berechtigt ist, stellt das Endgerät 2 den gewünschten Content dar, andernfalls erfolgt keine Darstellung (Content, wenn erlaubt, sonst Abbruch).

Mit Hilfe dieser Methodik ist sichergestellt, dass keine vertraulichen bzw. persönlichen Nutzerdaten an die anfragende Instanz 3, also das Endgerät 2, zurückgeliefert werden. Um den oben beschrieben Ablauf zu gewährleisten, müssen entsprechende Nutzerdaten (im obigen Beispiel das Geburtsdatum des Nutzers) bei der "Vertrauenswürdigen Instanz" 3 hinterlegt sein.

Um sicherzustellen, dass die Antwort 53 (erlaubt / nicht erlaubt) wirklich von der "Vertrauenswürdigen Instanz" 3 generiert wurde, kann diese erfindungsgemäß mit einer digitalen Signatur versehen werden.

In einer weiteren Ausprägung der Erfindung ist vorgesehen, vor der Contentdarstellung zusätzlich eine Authentisierungsprozedur einzuleiten, vorausgesetzt, die Verifikationsprozedur hat die Nutzungsberechtigung bestätigt.

Innerhalb der Authentisierungsprozedur muss der Nutzer sich zusätzlich authentisieren, wie dies ebenfalls in Figur 5 dargestellt ist.

Diese Authentisierung 54 kann zum Beispiel durch Eingabe der PIN 55 oder durch Abfrage von biometrischen Daten (Fingerabdruck etc.) oder mittels eines im bzw. verlässlich am Körper angebrachten elektronischen Identifikators auf geeigneter technischer Basis wie beispielsweise RFID erfolgen.

Bei der Authentisierungsprozedur wird durch eine Eingabe 55 von Nutzerdaten, wie beispielsweise einer Persönlichen Identifikationsnummer (PIN) oder der Erfassung biometrischer Daten, wie beispielsweise eines Fingerabdruckes, mittels entsprechender Lesegeräte über ein Nutzerinterface 4 eine weitere Authentisierung des Benutzers vorgenommen. Die erfassten Daten werden von dem Nutzerinterface 4 weitergegeben in Form einer Mitteilung 56 an das Endgerät 2, welches diese Daten wiederum zwecks Verifikation der Vertrauenswürdigen Instanz 3 zuleitet, 57.

Nach Überprüfung 58 der Authentisierungsdaten durch die Vertrauenswürdige Instanz 3 wird eine entsprechende Meldung 59 (erlaubt / nicht erlaubt) generiert und an das Endgerät 2 übermittelt. Das Empfangsgerät 2 entschlüsselt nunmehr, falls notwendig, im Falle "erlaubt" den Content und stellt den Content dar 60.

Sofern der Meldung 59 (erlaubt / nicht erlaubt) zufolge die individuelle Nutzung des Contents zulässig ist, stellt das Empfangsgerät den Content dar 60, andernfalls erfolgt keine Darstellung (Content, wenn erlaubt, sonst Abbruch).

Durch diese zweistufige Prüfung der Nutzungsberechtigung durch die vertrauenswürdige Instanz 3 wird somit ein Höchstmaß an Sicherheit bei der Nutzung eines broadcastbasierten Kommunikationsdienstes 1 durch einen individuellen Benutzer gewährleistet.

Durch diese zusätzliche Abfrage mittels eines Nutzerinterfaces 4 kann sichergestellt werden, dass es sich bei dem aktuellen Nutzer des Endgerätes 2 tatsächlich um den Nutzer handelt, für den die Verifikationsanfrage 51 initiiert wurde.

Als Randbedingung gilt hier, dass das entsprechende Identifikationsdatum (Biometrische Datum, PIN etc.) bei der "Vertrauenswürdigen Instanz" 3 (SIM/USIM; eine Applikation, welche in einem gesicherten Bereich der Endgeräte-Hardware verankert ist oder eine externe Applikation etc.) verifiziert werden kann, indem dort die hierzu relevanten Daten (PIN, kryptographische Schlüssel o.ä.) hinterlegt sind.

Eine elementare Realisierung der Ausführungsbeispiele im Hinblick auf eine Altersverifikation stellt die Speicherung des Geburtsdatums des Nutzers auf seiner SIM/USIM dar, wobei die SIM/USIM mittels der Eingabe einer nur dem Nutzer bekannten PIN zu aktivieren ist. Die zur Überprüfung benötigten Daten sind hierzu auf der SIM/USIM gespeichert und werden der Vertrauenswürdigen Instanz übermittelt.

## Patentansprüche

1. Verfahren zur Überprüfung der Nutzungsberechtigung für einen broadcastbasierten Kommunikationsdienst (1) und zur Darstellung von Medieninhalten, die über den Kommunikationsdienst (1) an eine Vielzahl von Empfängern verschlüsselt ausgestrahlt werden, wobei der Kommunikationsdienst (1) mittels eines Endgerätes (2) nutzbar ist und die Medieninhalte mittels des Endgerätes (2) darstellbar sind, **dadurch gekennzeichnet, dass** das Endgerät (2) einen Verifikationsprozess (12, 22, 32) auslöst, bei dem die Nutzungsberechtigung mittels einer Überprüfungsinstanz (3) überprüft wird, und dass die Überprüfungsinstanz (3) nach der Prüfung der Nutzungsberechtigung eine Meldung (53) mit einer Information erzeugt, die angibt, ob der Nutzer berechtigt oder nicht berechtigt ist, sich einen Medieninhalt darstellen zu lassen, und dass diese Meldung (53) an das Endgerät (2) übermittelt wird, wobei erst bei Vorliegen der die Nutzungsberechtigung bestätigenden Meldung (53) die Darstellung (15, 25, 35) der Inhalte mittels des Endgerätes (2) erfolgt.

2. Verfahren nach Anspruch 1, **dadurch gekennzeichnet, dass** eine Entschlüsselung (14, 24, 34) der verschlüsselt ausgestrahlten Medieninhalte mittels des Endgerätes (2) nach Erhalt der die Nutzungsberechtigung bestätigenden Meldung (53) durchgeführt wird und danach die Darstellung der Inhalte mittels des Endgerätes (2) erfolgt.

3. Verfahren nach Anspruch 1, **dadurch gekennzeichnet, dass** eine Entschlüsselung (24) der verschlüsselt ausgestrahlten Medieninhalte mittels des Endgerätes (2) unmittelbar nach dem Empfang (20) der Medieninhalte durchgeführt wird, wobei die Darstellung der Inhalte (25) mittels des Endgerätes (2) bis zum Erhalt der die Nutzungsberechtigung bestätigenden Meldung (53) von der Überprüfungsinstanz (3) gesperrt ist und erst nach dem Erhalt dieser Meldung (53) die Darstellung der Inhalte (25) mittels des Endgerätes (2) erfolgt.

4. Verfahren nach einem der vorherigen Ansprüche, **dadurch gekennzeichnet, dass** den verschlüsselt ausgestrahlten Medieninhalten ein Protokollelement zugefügt wird, insbesondere ein standardisiertes Protokollelement, wobei dieses Protokollelement vom Endgerät (2) dahingehend ausgewertet wird, ob der Verifikationsprozess (12, 22, 32) von dem Endgerät (2) auszulösen ist.

5. Verfahren nach einem der vorherigen Ansprüche, **dadurch gekennzeichnet, dass** die Überprüfungsinstanz (3) die Nutzungsberechtigung durch Abfrage eines Teilnehmeridentifikationsmoduls (SIM, USIM) des Endgerätes (2), insbesondere eines Mobilfunkendgerätes, überprüft.

6. Verfahren nach einem der vorherigen Ansprüche, **dadurch gekennzeichnet, dass** die Überprüfungsinstanz (3) ganz oder teilweise außerhalb des Endgerätes (2) angesiedelt ist, insbesondere auf einer externen Datenverarbeitungsanlage, und/oder dass die Überprüfungsinstanz (3) ganz oder teilweise in einem geschützten Bereich des Endgerätes (2), auf den der Nutzer keinen Zugriff hat, angesiedelt ist.

7. Verfahren nach einem der vorherigen Ansprüche, **dadurch gekennzeichnet, dass** vor oder nach der Überprüfung der Nutzungsberechtigung eine Nutzerauthentisierung (12, 22, 32) erfolgt, insbesondere durch Abfrage einer Persönlichen Identifikationsnummer (PIN) und/oder Erfassung und Auswertung biometrischer Daten.

8. Verfahren nach einem der vorherigen Ansprüche, **dadurch gekennzeichnet, dass** die Meldung der Überprüfungsinstanz und/oder die Kommunikation zwischen Endgerät (2) und Überprüfungsinstanz (3) kryptografisch gesichert wird, insbesondere jeweils mit einer digitalen Signatur versehen wird.
